# EUROPÄISCHE PATENTANMELDUNG

(11) **EP 1 614 936 A2**
(43) Veröffentlichungstag der Anmeldung: **11.01.2006**
(21) Anmeldenummer: 05014512.7
(22) Anmeldetag: 05.07.2005
(51) Int. Cl.: F16H 59/10, F16H 59/02

(54) **Schaltvorrichtung für ein Automatikgetriebe**

(30) Priorität: 09.07.2004 DE 102004033672
(71) Anmelder: ZF FRIEDRICHSHAFEN AG, 88038 Friedrichshafen (DE)
(72) Erfinder: Ersoy, Metin, Prof. Dr., 65396 Walluf (DE)

(57) **Zusammenfassung**

Die Erfindung betrifft eine Schaltvorrichtung 1 zur Übertragung von Schaltbefchlen an ein automatisches Getriebe eines Kraftfahrzeuges, mit einem Gehäuse 2 und/oder einem Rahmen, einer ersten Gasse 3, vorzugsweise einer Automatikgasse, einer zweiten Gasse 4, die vorzugsweise parallel zur ersten Gasse 3 angeordnet ist, einer Verbindungsgasse 5 zum Übergang eines Wählhebels 6 zwischen der ersten 3 und der zweiten Gasse 4, und mit zumindest einer Schaltachse 7 zum Verschwenken des Wählhebels 6 in mindestens einer der Gassen 3, 4, einer Wählachse 9 zum Verschwenken des Wählhebels 6 in der Verbindungsgasse 5 und zumindest einem Kopplungselement 10 zwischen Wählhebel 6 und Automatikgetriebe.

Die Erfindung zeichnet sich dadurch aus, dass für die erste Gasse 3 und die zweite Gasse 4 jeweils eine eigene Schaltachse 7, 8 vorgesehen ist, wobei die Schaltachsen 7, 8 parallel und höhenversetzt zueinander angeordnet sind und das Kopplungselement 10 nahe einer der Schaltachsen 7, 8 angreift.

## Beschreibung

Die Erfindung betrifft eine Schaltvorrichtung zur Übertragung von Schaltbefehlen an ein automatisches Getriebe eines Kraftfahrzeuges, mit einem Gehäuse und/oder einem Rahmen, einer ersten Gasse, vorzugsweise ein er Automatikgasse, einer zweiten Gasse, die vorzugsweise parallel zur ersten Gasse angeordnet ist, einer Verbindungsgasse zum Übergang eines Wählhebels zwischen der ersten und der zweiten Gasse, und mit zumindest einer Schaltachse zum Verschwenken des Wählhebels in mindestens einer der Gassen, einer Wählachse zum Verschwenden des Wählhebels in der Verbindungsgasse und zumindest einem Kopplungselement zwischen Wählhebel und Automatikgetriebe.

Eine ähnliche Schaltvorrichtung ist aus der Patentanmeldung DE 102 52 009 A1 der Anmelderin bekannt. Diese Schaltvorrichtung verfügt bereits über mindestens zwei Gassen, wobei die erste, eine Automatikgasse ist, die zur Anwahl von Automatikprogrammen, vorzugsweise der Programme Parken, Neutral, Rückwärtsfahren und Drive, dient. Die zweite Gasse, meist mit Tiptronicgasse bezeichnet, dient zum manuellen Auf- und Abwärtsschalten von Getriebestufen. Bei dieser Schaltvorrichtung werden in der Automatikgasse die auf den Wählhebel ausgeübten Schaltbefehle über einen linearbeweglichen Schaltschlitten, der über einen Seilzug mit dem Fahrzeuggetriebe verbunden ist, an das Fahrzeuggetriebe übertragen. In der Tiptronicgassc wird der Wählhebel vom Schaltschlitten entkoppelt, so dass beim Tippen in der Tiptronicgasse der Seilzug nicht betätigt wird. Durch die Ausführung des Schaltschlittens konnte bereits bei dieser Schaltvorrichtung ohne großen Aufwand eine Dreigassen-Schaltung ermöglicht werden. In der Dreigassen-Ausführung ist meist in der Milte eine Automatikgasse und seitlich hierzu sind zwei symmetrisch um diese angeordnete Tiptronicgassen vorgesehen.

Diese Schaltvorrichtung weist bereits eine gute kinematische Funktionalität auf. Jedoch zwingen die ständig wachsenden Ansprüche der Automobilindustrie an die Zulieferer, die Kosten für ihre Produkte zu reduzieren.

Es ist daher Aufgabe der Erfindung, eine Schaltvorrichtung für ein Automatikgetriebe zur Verfügung zu stellen, welche eine erste Gasse und zumindest eine zweite Gasse aufweist, wobei die zweite Gasse wahlweise rechts oder links neben der ersten Gasse angeordnet sein soll. Diese Schaltvorrichtung, die auch generell als Dreigassen-Schaltu.ng aufgebaut sein kann, soll im Vergleich zur bekannten Schaltvorrichtung wesentlicher einfacher aufgebaut sein und damit kostengünstiger produziert werden.

Die Aufgabe der Erfindung wird durch eine Schaltvorrichtung mit den Merkmalen des Anspruches 1 gelöst. Vorteilhafte Weiterbildungen der Erfindung sind Gegenstand untergeordneter Patentansprüche.

Gemäß der Erfindung werden in der Automatikgasse, die um eine erste Schaltachse geschwenkt werden kann, die Bewegungen des Wählhebels über ein Kopplungselement, in der Regel ein Seilzug, an das Automatikgetriebe übertragen werden. In der seitlichen Tiptronicgasse werden die manuellen Tippbefehle meist nicht mit einem Seilzug, sondern über Schaltelemente übertragen. Um in der Tiptronicgasse nicht den Seilzug zu betätigen und somit eine Getriebeposition des Automatikgetriebes zu verändern, muss der Seilzug in der Tiptroniegasse vom Wählhebel entkoppelt, also wirkfrei geschaltet werden. Die Entkopplung des Seilzuges kann beim Wechsel von der Automatikgasse in die Tiptronicgasse dadurch vereinfacht werden, dass die Tiptronicgasse um eine zweite Schaltachse schwenkbar ausgeführt ist, wobei der Seilzug nahe dem Drehpunkt der zweiten Schaltachse angeordnet ist. Greift der Seilzug in der Nähe des Drehpunktes einer Schaltachse an, werden in dieser Stellung des Wählhebels keine Bewegungen des Wählhebels auf den Seilzug übertragen. Bei dieser Ausführung kann auf den bisher verwendeten Schaltschlitten in einer Schaltvorrichtung verzichtet werden. Durch den Verzicht auf Bauteile, können die Kosten für eine solche Schaltvorrichtung reduziert werden.

Entsprechend dieser Erkenntnis schlägt die Erfindung vor, die bekannte Schaltvorrichtung zur Übertragung von Schaltbefehlen an ein automatisches Getriebe eines Kraftfahrzeuges, mit einem Gehäuse und/oder einem Rahmen, einer ersten Gasse, vorzugsweise einer Automatikgasse, einer zweiten Gasse, die vorzugsweise parallel zur ersten Gasse angeordnet ist, einer Verbindungsgasse zum Übergang eines Wählhebels zwischen der ersten und der zweiten Gasse, und mit zumindest einer Schaltachse zum Verschwenken des Wählhebels in mindestens einer der Gassen, einer Wählachse zum Verschwenken des Wählhebels in der Verbindungsgasse und zumindest einem Kopplungselement zwischen Wählhebel und Automatikgetriebe, dahingehend zu verbessern, dass für die erste Gasse und die zweite Gasse jeweils eine eigene Schaltachse vorgesehen ist, wobei die Schaltachsen parallel und höhenversetzt zueinander angeordnet sind und das Kopplungselement nahe einer der Schaltachsen angreift.

Wird die Schwenkachse von einer Schaltachse auf die andere Schaltachse verlagert, kann das Kopplungsmittel wahlweise eine Hebelkraft des Wählhebels übertragen oder dadurch wirkfrei geschaltet werden, dass es im Wählhebeldrehpunkt sitzt. Es wird ein einfacher Aufbau der Schaltvorrichtung erreicht, wodurch der Bauraum der neuen Schaltvorrichtung sehr kompakt ausfällt. Durch die unkomplizierte Mechanik kann die Kinematik während des Schaltvorganges besonders "leichtgängig" also kräfteschonend und somit besonders komfortabel ausgeführt werden.

Es ist günstig, wenn Mittel vorgesehen sind, die einen Wechsel von einer Schaltachse auf die andere Schaltachse ermöglichen. Hierdurch kann die Schwenkachse des Wählhebels verlagert werden. Greift das Kopplungsmittel in einem bestimmten Abstand zur aktuellen Schaltachse an, so kann hierdurch eine Kraftübertragung von der auf den Wählhebel ausgeübten Kraft auf das Kopplungsmittel ermöglicht werden. Wird nun die Schwenkachse an den Befestigungspunkt des Kopplungsmittels verlagert, so wird auf das Kopplungsmittel keine Kraft beim. Verschwenken des Wählhebels ausgeübt.

Eine bevorzugte Ausführung kann durch zumindest ein Bolzenelement realisiert werden, das am Wählhebel angeordnet ist. Das Bolzenelement kann in zumindest eine Aussparung des Gehäuses und/oder des Rahmens der Schaltvorrichtung eingreifen. Beim Eingreifen des Bolzens in diese Aussparung wird dieser Bereich nun zur Schwenkachse des Wählhebels.

Alternativ dazu kann am Wählhebel zumindest eine Aussparung, vorzugsweise eine Bohrung, vorgesehen sein, in welche zumindest ein Bolzenelement des Gehäuses und/oder des Rahmens eingreift.

Es ist günstig, wenn am Wählhebel und dem Gehäuse und/oder Rahmen jeweils zwei Bolzenelemente und zwei Aussparungen angeordnet sind. Sind die Bolzenelemente und die Aussparungen auf der rechten und der linken Seite des Wählhebels symmetrisch angeordnet, kann hierdurch eine symmetrische Anordnung der zweiten Gasse um die erste Gasse auf der rechten oder der linken Seite ermöglicht werden. Es lässt sich so eine Schaltvorrichtung zur Verfügung stellen, die lediglich durch Änderung der Abdeckkulisse sowohl für Rechtslenkerfahrzeuge als auch für Linkslenkerfahrzeuge eingesetzt werden kann.

In einer Ausführung der Schaltvorrichtung kann das Bolzenelement oder die Aussparung des Wählhebels in der Nähe des Befestigungspunktes des Kopplungselements angeordnet sein. Hierdurch wird das Bolzenelement, das in die Aussparung eingreift, nun zur Schwenkachse. Beim Eingreifen des Bolzenelementes wird gleichzeitig das Kopplungselement um die Schwenkachse kräftefrei gelagert.

Um zumindest eine der Schaltachsen wahlweise für Verschwenkbewegungen zu halten oder für lineare Bewegungen freizugeben, sollte zumindest eine Steuerkulisse innerhalb der Schaltvorrichtung angeordnet sein, die derart ausgebildet ist, dass zumindest eine der beiden Schaltachse innerhalb der Steuerkulisse geführt wird. Diese Steuerkulisse kann durch eine Einfräsung oder Aussparung am Gehäuse realisiert werden, in der eine Schaltachse eingreift.

Die Steuerkulisse sollte eine erste Stellung aufweisen, in der eine Schwenkbewegung der Schaltachse unterstützt wird, und zumindest eine zweite Stellung aufweisen, in der eine nahezu lineare Bewegung der Schaltachse ermöglicht wird. Hierdurch wird beim Wechsel der Schaltachsen eine Schaltachse freigegeben, nachdem die andere Schaltachse zum Verschwenken des Wählhebels dient.

Zwischen Wählhebel und Gehäuse kann zumindest ein Federelement, vorzugsweise zwei Federelemente, angeordnet sein, welche zumindest eine Bewegung des Wählhebels aus der zweiten in die erste Gasse unterstützen. Ein Wechsel des Wählhebels von der zweiten in die erste Gasse wird hier durch das Federelement unterstützt, wodurch die manuellen Kräfte zum Gassenwechsel verringert werden.

Beispielsweise können zwischen dem Wählhebel und dem Automatikgetriebe als Kopplungselement zumindest teilweise mechanische Elemente zur Übertragung der Handkräfte angebracht werden, die Schaltprugramme im Automatikgetriebe, wie Parken, Neutral, Rückwärtsfahren oder Drive schalten. Hierfür eignet sich zum Beispiel ein einfacher Seilzug, ein Bowdenzug oder auch ein mechanisches Gestänge.

Das Kopplungselement kann zumindest teilweise durch elektrische Elemente realisiert werden. Beispielsweise können durch elektrische Motoren die Handkräfte am Wählhebel verstärkt werden, wodurch insgesamt die Handkräfte zum Einlegen einer anderen Getriebestufe verringert werden. So kann die Schaltposition des Wählhebels zum Beispiel mittels Reed-Kontakten detektiert werden und die detektierten Positionen über einen Stellmotor, der die Getriebepositionen schaltet, umgesetzt werden. Hierdurch können die manuellen Kräfte zum Schalten der Automatikpositionen reduziert oder Sicherheitsfunktionen eingebaut werden.

Alternativ oder ergänzend dazu kann das Kopplungselement zumindest teilweise durch optische Elemente realisiert werden. Hierdurch kann beispielsweise in einer Tiptronicgasse ein kontaktloses und somit schnelles Schalten ermöglicht werden. Die Position des Wählhebels wird optisch und somit kontaktlos detektiert. Der optische Detektor, der ein Abstandslaser sein kann, übermittelt die Schaltprogramme an einen weiteren Schaltmechanismus, der dann die Automatikgetriebepositionen (P, N, R und D) schaltet. Auch bei dieser Ausführung der Kopplung können die manuellen Kräfte zum. Schalten der Automatikpositionen reduziert werden.

In der zweiten G asse können manuelle Tippbefehle umgesetzt werden, insbesondere die Wahl der Fahrstufe bei der "Tiptronic". Um das Hoch- und Abschalten der Fahrstufen, wobei diese Optionen meist mit "+" und "-" gekennzeichnet sind, besonders direkt und schnell zu ermöglichen, sollten zur Umsetzung der Schaltbefehle elektrische und/oder optische Schalter eingesetzt werden.

Es ist besonders günstig, wenn die Schaltvorrichtung eine dritte Schaltgasse aufweist, wobei die beiden außenliegenden Schaltgassen vorzugsweise symmetrisch zur mittleren Schaltgasse ausgebildet sind. So kann beispielsweise über die mittlere Schaltgasse das Schaltprogramm des Automatikgetriebes geschaltet werden und die beiden äußeren Schaltgassen stehen zur Umsetzung der Tippbefehle zum Beispiel einer "Tiptronic" zur Verfügung. Wobei in den beiden Tiptronicgassen unterschiedliche Abstufungen der Getriebestufen ausgeführt sein können.

Weitere Merkmale und Vorteile der Erfindung ergeben sich aus den Unteransprüchen und der nachfolgenden Beschreibung bevorzugter Ausführungsbeispiele unter Bezugnahme auf die Zeichnungen. In den. Figuren sind nur die für das Verständnis der Erfindung notwendigen wesentlichen Elemente dargestellt.

Die Figuren zeigen im Einzelnen:
- Figur 1: Draufsicht auf eine Schaltkulisse einer Schaltvorrichtung mit einer Automatikgasse und zumindest einer Tiptronicgasse;
- Figur 2: Schnittansicht quer zur Fahrzeuglängsrichtung durch das Gehäuse der neuen Schaltvorrichtung;
- Figur 3: Seitenansicht des Gehäuses der neuen Schaltvorrichtung;
- Figur 4: Seitliche Schnittansicht durch das Gehäuse der neuen Schaltvorrichtung.

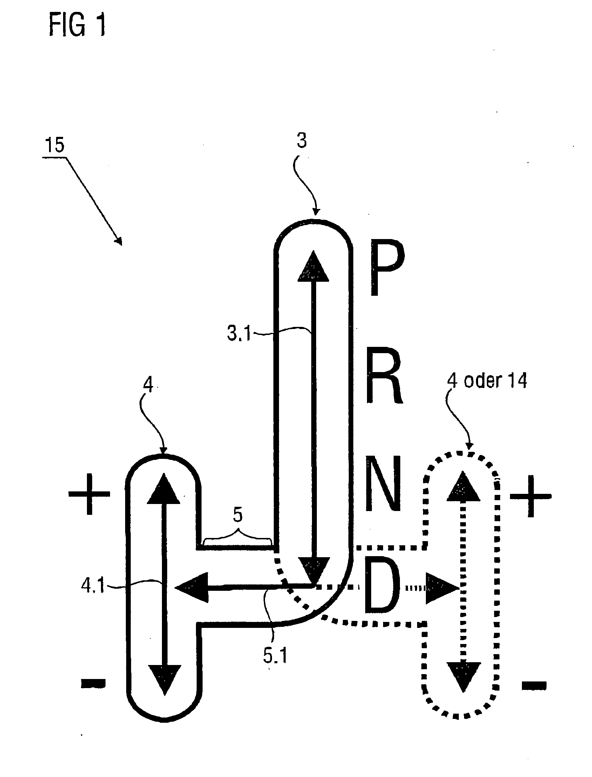

Die **Figur 1** zeigt in der Draufsicht eine Schaltkulisse 15, in der der Wählhebel der Schaltvorrichtung geführt wird. Der Wählhebel ist in Figur 1 nicht dargestellt. In der Mitte der Figur 1 befindet sich die erste Gasse 3, hier eine Automatikgasse. Der Wählhebel kann symbolisiert durch den Pfeil mit dem Bezugszeichen 3.1 in der Automatikgasse 3 bewegt werden. Hierdurch können verschiedene Getriebestufen des Automatikgetriebes, nämlich Parken P, Rückwärtsgang R, Neutral N und Drive D, angewählt werden. In dieser Ausführung des Automatikgetriebes ist zusätzlich zur Automatikgasse 3 eine zweite Gasse 4, nämlich eine Tiptronicgasse vorgesehen. Die Bewegung des Wählhebels in der Tiptronicgasse 4 ist durch den Pfeil 4.1 dargestellt. In der Tiptronicgasse 4 können, durch das "+" und "-"-Symbol angedeutet, die Getriebestufe manuell hoch oder herab geschaltet werden. Die Tiptronicgasse 4 ist meist bei Fahrzeugen, die als Linkslenker ausgeführt sind, links neben der Automatikgasse 3 angeordnet. Durch die gestrichelte Umrandung ist in Figur 1 auch die Anordnung der Tiptronicgasse 4 für Rechtslenkerfahlzeuge dargestellt. Über eine Verbindungsgasse 5 kann der Wählhebel zwischen der Automatikgasse 3 und der Tiptronicgasse 4 hin und her bewegt werden. Die neue Schaltvorrichtung soll derart ausgeführt sein, dass sich sowohl einfache Linkslenkerschaltungen als auch Rechtslenkerschaltungen realisieren lassen.

Die Erfindung sieht vor, dass die Schaltvorrichtung und dann entsprechend die Kulisse derart ausgeführt sind, dass links und rechts neben der Automatikgasse 3 eine erste Tiptronicgasse 4 und eine zweite Tiptronicgasse 14 angeordnet sind. Die Tiptronicgassen 4 und 14 können sich beispielsweise dadurch unterscheiden, dass die Abstufungen beim manuellen Hoch- oder Herunterschalten der Getriebestufen unterschiedlich sind. Die erste Tiptronicgasse 4 kann eine Abstimmung auf sportliche Fahrweise aufweisen, während die zweite Tiptronicgasse 14 eine Abstimmung auf defensive Fahrweise, beispielsweise im Winter, aufweist.

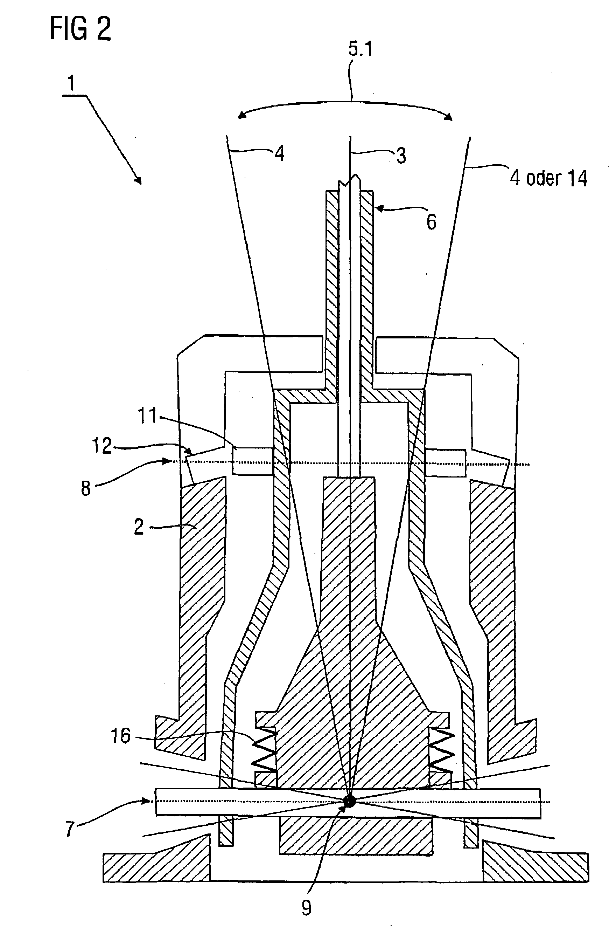

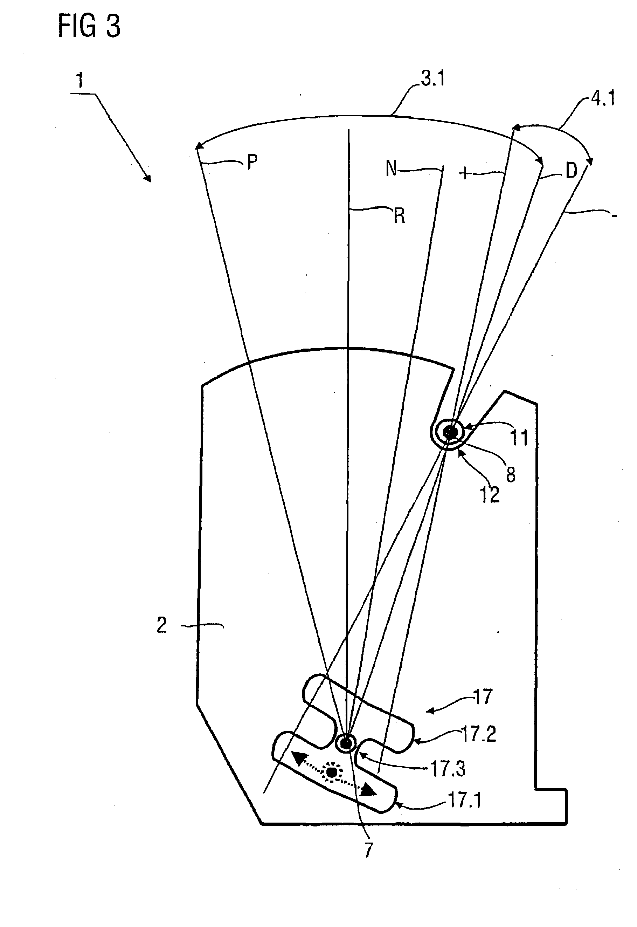

Die **Figur 2** zeigt einen Querschnitt durch das Gehäuse 2 der neuen Schaltvorrichtung 1. Die Schnittansicht wurde senkrecht zur Fahrzeuglängsrichtung und durch den Wählhebel 6 erstellt. Der Wählhebel 6 befindet sich gerade in der ersten Gasse 3, der Automatikgasse. In der Automatikgasse 3 kann der Wählhebel 6 um die erste Schaltachse 7 geschwenkt werden, wodurch verschiedene Automatikprogramme anwählbar sind. Die Wählhebelstellung in den verschiedenen Automatikprogrammen ist in Figur 2 nicht erkennbar. Links und rechts am Wählhebel 6 ist jeweils ein Bolzen 11 angebracht. Auf der linken und der rechten Seite des Gehäuses 2 ist auf der Höhe des Bolzens11 im Gehäuse 2 jeweils eine Aussparung 12 eingearbeitet. Der Wählhebel 6 kann in der Automatikgasse 3, wenn er sich in der Drive-Position (nicht in Figur 2 dargestellt) befindet, um die Wählachse 9 nach rechts oder links geschwenkt werden. Die Bewegung nach rechts oder links entspricht der Bewegungsrichtung 5.1 des Wählhebels 6 in der Verbindungsgasse zwischen Automatikgasse 3 und zweiter Gasse 4 oder dritter Gasse 14. Wird der Wählhehel 6 nach rechts oder nach links geschwenkt, so greift der rechte oder der linke Bolzen 11 in der jeweiligen Aussparung 12 am Gehäuse 2 ein. Die bisherige erste Schaltachse 7 wird dann über einen Mechanismus, der in Figur 3 zu sehen ist, freigegeben. Nun lässt sich der Wählhebel 6 um die zweite Schaltachse 8 verschwenken. Am Wählhebel 6 ist auf der linken und der rechten Seite jeweils eine Feder 16 angebracht, die eine Rückbewegung des Wählhebels 6 aus der zweiten Gasse 4 und dritten Gasse 14 in die Automatikgasse 3 unterstützt.

Die **Figur 3** zeigt eine Seitenansicht des Gehäuses 2 der neuen Schaltvorrichtung 1. Die Wählhebelstellungen in der Getriebeposition der Automatikgasse Parken P, Rückwärtsgang R, Neutral N und Drive D sind jeweils durch einen Strich dargestellt. Diese Striche entspringen jeweils dem Drehpunkt in der ersten Schaltachse 7. Die Wählhebelstellungen "+" und "-" in der Tiptronicgasse, die ebenfalls durch Striche dargestellt sind, haben ühren Drehpunkt am Bolzen 11 der nun mit der zweiten schallachse 8 übereinstimmt. Der Wählhebel, der in Figur 3 nicht dargestellt ist, wäre gerade in Figur 3 in der Automatikgasse in der Getriebeposition Drive D. Der Drehpunkt ist also die erste Schaltachse 7. Würde der Wählhebel aus der Zeichenebene heraus geschwenkt werden, also in die zweite Gasse bewegt werden, so würde der Bolzen 11 in die Aussparung 12 eingreifen. Der Drehpunkt wäre nun um den Bolzen 11, also um die zweite Schaltachse 8. Durch die Drehung des Wählhebels aus der Zeichenebene, würde die erste Schaltachse 7 in der Steuerkulisse 17 von der Haltestellung 17.3 in die untere Führung 17.1 rutschen. Die Steuerkulisse kann beispielsweise als H-förmige Ausfräsung oder Aussparung am Gehäuse der Schaltvorrichtung eingearbeitet sein. Hierdurch wäre ein Verschwenken des Wählhebels um den Bolzen 11 als zweite Schaltachse 8 möglich. Die erste Schaltachse 7 könnte sich entlag der unteren Führung 17.1 bewegen. Die Bewegung der Schaltachse 7 in der unteren Führung 17.1 ist durch die beiden gestrichelten Pfeile und den gestrichelten Kreis, der die erste Schaltachse in dieser Stellung darstellen soll, abgebildet. Würde umgekehrt der Wählhebel in die Zeichenebene hinein geschwenkt werden, also in die dritte Gasse bewegt werden, so würde der Bolzen 11 auf der anderen Seite des Wählhebels in die Aussparung 12 auf der anderen Seite des Gehäuses 2 eingreifen. Dieser Bolzen 11 und diese Aussparung 12 sind nicht in Figur 3 dargestellt. Der Drehpunkt wäre nun um diesen Bolzen 11. Durch die Drehung des Wählhebels in die Zeichenebene, würde die erste Schaltachse 7 in der Steuerkulisse 17 in die obere Führung 17.2 rutschen. Hierdurch wäre ein Vorschwenken des Wählhebels um den Bolzen 11 als Verschwenkachse möglich. Die erste Schaltachse 7 könnte sich entlang der oberen Führung 17.2 bewegen.

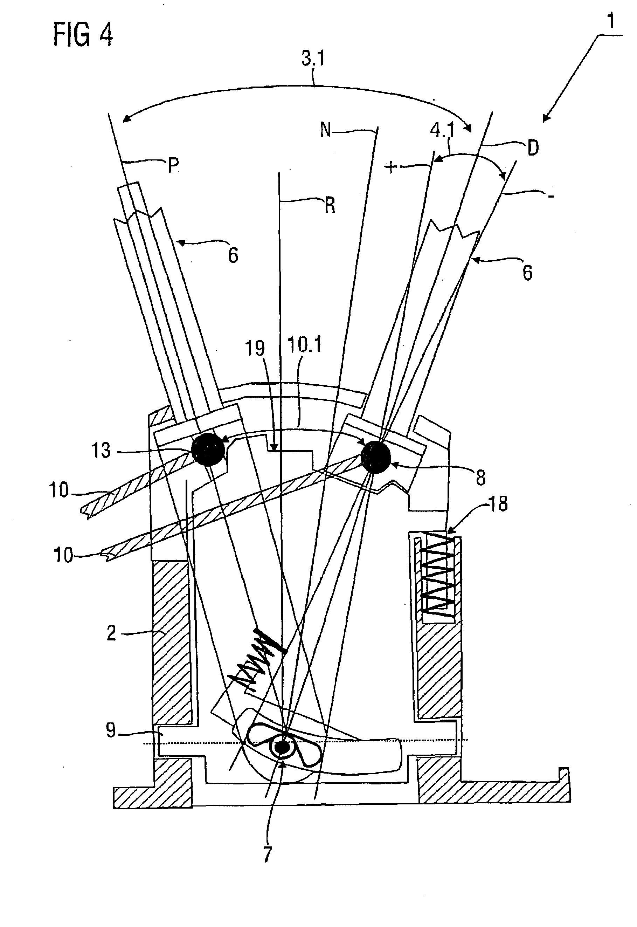

Die **Figur 4** zeigt eine seitliche Schnittansicht durch das Gehäuse 2 der neuen Schaltvorrichtung 1. Zur besseren Erklärung ist in Figur 4 der Wählhebel 6 zweimal abgebildet, obwohl sich nur ein Wählhebel 6 in einer Schaltvorrichtung 1 befindet. Der linke Wählhebel 6 in Figur 4 befindet sich in der ersten Gasse, der Automatikgasse, in der Parkposition P des Automatikgetriebes. Der rechte Wählhebel 6 befindet sich ebenfalls in der Automatikgasse in der Driveposition D des Automatikgetriebes. Die Bewegungsrichtung des Wählhebels in der Automatikgasse wird durch den Pfeil 3.1 dargestellt. Am Wählhebel 6 ist am Befestigungspunkt 13 ein Seilzug 10 angebracht. Über diesen Seilzug 10 werden die Bewegungen 3.1 des Wählhebels 6 in der Automatikgasse an das Automatikgetriebe weitergegeben. Die Bewegung des Seilzuges 10 ist durch den Pfeil 10.1 dargestellt. Drehpunkt des Wählhebels 6 ist in der Automatikgasse die erste Schaltachse 7. Mit Hilfe der Kulisse 19 kann der Wählbebel 6 in der Automatikgasse für die verschiedenen Automatikprogramme in den Positionen P, N, R und D eingerastet werden.

In der Driveposition D kann der Wählhebel 6 durch Verschwenken um die Wählachse 9 aus der Zeichenebene heraus oder in die Zeichenebene hinein in die zweite oder dritte Gasse eingelegt werden. Ein Gassenrastwechselmechanismus 18 unterstützt das Einrasten des Wählhebels 6 in der zweiten oder dritten Gasse. In der zweiten oder dritten Gasse kann der Wählhebel 6 nur um die zweite Schaltachse 8 verschwenkt werden. Die zweite Schaltachse 8 verläuft durch den Befestigungspunkt 13 des Seilzuges 10. Die Bewegungsrichtung 4.1 des Wählhebels 6, zum Beispiel in der zweiten Gasse, bewirkt nun keine Verschiebung des Seilzuges 10. Durch diese besondere Anbringung des Seilzuges 10 und die Verlagerung der Verschwenkachse von der ersten Schaltachse 7 zur zweiten Schaltachse 8 wird der Seilzug 10 in der zweiten und dritten Gasse ohne zusätzliche mechanische Mittel entkoppelt.

Insgesamt wird also durch die Erfindung eine Schaltvorrichtung zur Übertragung von Schaltbefehlen an ein automatisches Getriebe eines Kraftfahrzeuges zur Verfügung gestellt, welche gegenüber den bekannten Schaltvorrichtungen wesentlich einfacher aufgebaut ist und damit kostengünstiger produziert werden kann.

Es versteht sich, dass die vorstehend genannten Merkmale und die Merkmale der Ansprüche nicht nur in den jeweils angegebenen Kombinationen, sondern auch in anderen Kombinationen oder in Alleinstellung verwendbar sind, ohne den Rahmen der Erfindung zu verlassen.

### Bezugszeichenliste

- 1: Schaltvorrichtung
- 2: Gehäuse
- 3: erste Gasse / Automatikgasse
- 3.1: Bewegungsrichtung des Wählhebels in der ersten Gasse
- 4: zweite Gasse / erste Tiptronicgasse
- 4.1: Bewegungsrichtung des Wählhebels in der zweiten Gasse
- 5: Verbindungsgasse zwischen erster zweiter Gasse
- 5.1: Bewegungsrichtung des Wählhebels in der Verbindungsgasse
- 6: Wählhebel
- 7: erste Schaltachse
- 8: zweite Schaltachse
- 9: Wählachse
- 10: Seilzug
- 10.1: Bewegungsrichtung des Seilzuges
- 11: Bolzen
- 12: Aussparung
- 13: Befestigungspunkt des Seilzuges
- 14: dritte Gasse / zweite Tiptronicgasse
- 15: Schaltkulisse
- 16: Feder
- 17: Steuerkulisse
- 17.1: unteren Führung
- 17.2: obere Führung
- 17.3: Haltestellung für Schaltachse
- 18: Gassenwechselrastmechanismus
- 19: Kulisse der ersten Gasse
- P: Parken / Parkposition
- R: Rückwärtsgang / Rückwärtsfahrposition
- N: Neutral / Neutralposition
- D: Drive / Driveposition
- +: höhere Getriebestufe
- -: niedere Getriebestufe

## Patentansprüche

1. Schaltvorrichtung (1) zur Übertragung von Schaltbefehlen an ein automatisches Getriebe eines Kraftfahrzeuges, mit:
- einem Gehäuse (2) und/oder einem Rahmen,
- einer ersten Gasse (3), vorzugsweise einer Automatikgasse,
- einer zweiten Gasse (4), die vorzugsweise parallel zur ersten Gasse (3) angeordnet ist,
- einer Verbindungsgasse (5) zum Übergang eines Wählhebels (6) zwischen der ersten (3) und der zweiten Gasse (4), und mit
- zumindest einer Schaltachse (7) zum Verschwenken des Wählhebels (6) in mindestens einer der Gassen (3, 4),
- einer Wählachse (9) zum Verschwenken des Wählhebels (6) in der Verbindungsgasse (5)
- und zumindest einem Kopplungselement (10) zwischen Wählhebel (6) und Automatikgetriebe,
**dadurch gekennzeichnet, dass** für die erste Gasse (3) und die zweite Gasse (4) jeweils eine eigene Schaltachse (7, 8) vorgesehen ist, wobei die Schaltachsen (7, 8) parallel und höhenversetzt zueinander angeordnet sind und das Kopplungselement (10) nahe einer der Schaltachsen (7, 8) angreift.

2. Schaltvorrichtung gemäß dem voranstehenden Anspruch 1, **dadurch gekennzeichnet, dass** Mittel (11, 12) vorgesehen sind, die einen Wechsel von einer Schaltachse (7) auf die andere Schaltachse (8) ermöglichen.

3. Schaltvorrichtung gemäß dem voranstehenden Anspruch 2, **dadurch gekennzeichnet, dass** am Wählhebel (6) zumindest ein Bolzenelement (11) vorgesehen ist, welches in zumindest eine Aussparung (12) des Gehäuses (2) und/oder des Rahmens eingreift.

4. Schaltvorrichtung gemäß dem voranstehenden Anspruch 2, **dadurch gekennzeichnet, dass** am Wählhebel (6) zumindest eine Aussparung (12), vorzugsweise eine Bohrung, vorgesehen ist, in welche zumindest ein Bolzenelement (11) des Gehäuses (2) und/oder des Rahmens eingreift.

5. Schaltvorrichtung gemäß einem der voranstehenden Ansprüche 2 bis 4, **dadurch gekennzeichnet, dass** am. Wählhebel (6) und dern Gehäuse und/oder Rahmen jeweils zwei Bolzenelemente (11) und zwei Aussparungen (12) angeordnet sind.

6. Schaltvorrichtung gemäß einem der voranstehenden Ansprüche 2 bis 5, **dadurch gekennzeichnet, dass** das Bolzenelement (11) oder die Aussparung (12) des Wählhebels (6) in der Nähe des Befestigungspunktes (13) des Kopplungselements (10) angeordnet ist.

7. Schaltvorrichtung gemäß einem der voranstehenden Ansprüche 1 bis 6, **dadurch gekennzeichnet, dass** zumindest eine Steuerkulisse (17) angeordnet ist, die derart ausgebildet ist, das zumindest eine der beiden Schaltachse (7) innerhalb der Steuerkulisse (17) geführt wird.

8. Schaltvorrichtung gemäß dem voranstehenden Anspruch 7, **dadurch gekennzeichnet, dass** die Steuerkulisse (17) eine erste Stellung (17.3) aufweist, in der eine Schwenkbewegung der Schaltachse (7) unterstützt wird, und zumindest eine zweite Stellung (17.1, 17.2) aufweist, in der eine nahezu lineare Bewegung der Schaltachse (7) ermöglicht wird.

9. Schaltvorrichtung gemäß einem der voranstehenden Ansprüche 1 bis 8, **dadurch gekennzeichnet, dass** zwischen Wählhebel (6) und Gehäuse (2) zumindest ein Federelement (16), vorzugsweise zwei Federelemente (16), angeordnet ist, welches zumindest eine Bewegung (5.1) des Wählhebels (6) aus der zweiten Gasse (4) in die erste Gasse (3) unterstützt.

10. Schaltvorrichtung gemäß einem der voranstehenden Ansprüche 1 bis 9, **dadurch gekennzeichnet, dass** das Kopplungselement ein Seilzug (10), ein Bowdenzug oder ein Gestänge ist.

11. Schaltvorrichtung gemäß einem der voranstehenden Ansprüche 1 bis 10, **dadurch gekennzeichnet, dass** das Kopplungselement (10) zumindest teilweise durch elektrische Elemente realisiert wird.

12. Schaltvorrichtung gemäß einem der voranstehenden Ansprüche 1 bis 11, **dadurch gekennzeichnet, dass** das Kopplungselement (10) zumindest teilweise durch optische Elemente realisiert wird.

13. Schaltvorrichtung gemäß einem der voranstehenden Ansprüche 1 bis 12 **dadurch gekennzeichnet, dass** zur Umsetzung der Schaltbefehle in der zweiten Gasse (4) elektrische und/oder optische Schalter angebracht sind.

14. Schaltvorrichtung gemäß einem der voranstehenden Ansprüche 1 bis 13, **dadurch gekennzeichnet, dass** eine dritte Gasse (14) vorgesehen ist, wobei die beiden außenliegenden Gassen (4, 14) vorzugsweise symmetrisch zur mittleren Gasse (3) ausgebildet sind.

15. Schaltvorrichtung gemäß einem der voranstehenden Ansprüche 1 bis 14, **dadurch gekennzeichnet, dass** die zweite Gasse (4) und/oder die dritte Gasse (14) manuelle Tippbefehle umsetzen und vorzugsweise Tiptronicgassen sind.
